(19) Europäisches Patentamt
European Patent Office
Office européen des brevets

(11) Veröffentlichungsnummer: **0 246 552 B1**

(12) # EUROPÄISCHE PATENTSCHRIFT

(45) Veröffentlichungstag der Patentschrift: **21.08.91**

(51) Int. Cl.5: **D01F 8/10**, G02B 6/10

(21) Anmeldenummer: **87106917.5**

(22) Anmeldetag: **13.05.87**

(54) **Lichtleiter mit flüssigem Kern und einer Umhüllung aus Fluorkunststoff.**

(30) Priorität: **21.05.86 DE 3617005**

(43) Veröffentlichungstag der Anmeldung:
**25.11.87 Patentblatt 87/48**

(45) Bekanntmachung des Hinweises auf die Patenterteilung:
**21.08.91 Patentblatt 91/34**

(84) Benannte Vertragsstaaten:
**AT BE CH DE FR GB IT LI NL SE**

(56) Entgegenhaltungen:

| | |
|---|---|
| **EP-A- 0 200 013** | **DE-A- 3 523 243** |
| **DE-A- 3 704 871** | **US-A- 3 740 113** |
| **US-A- 3 995 934** | **US-A- 4 009 382** |

(73) Patentinhaber: **HOECHST AKTIENGESELL-SCHAFT**
**Postfach 80 03 20**
**W-6230 Frankfurt am Main 80(DE)**

(72) Erfinder: **Fitz, Herbert, Dr.**
**Kantstrasse 41**
**W-8269 Burgkirchen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 246 552 B1

## Beschreibung

Die Erfindung betrifft Lichtleiter mit einem flüssigen Kern, der aus einer Flüssigkeit hoher Strahlungstransmission besteht, und einem Mantel aus einem fluorhaltigen Polymermaterial.

Lichtleiter mit flüssigem Kern und einem diese umgebenden Kunststoffmantel sind bekannt, beispielsweise aus der US-PS 3 740 113, wo ein Mantelmaterial aus einem Homo-oder Copolymeren des 4-Methylpentens mit einem Brechungsindex von 1,45 einen lichtleitenden Kern aus einer Flüssigkeit umgibt, deren Brechungsindex um mindestens 3 % höher liegt. Als derartige Flüssigkeiten werden beispielsweise Benzylalkohol oder Nitrobenzol genannt. Lichtleiter mit flüssigem Kern haben im Vergleich zu den bekannten Lichtleitern mit festem Kern - zum Beispiel lichtleitenden Glasfasern mit einer Umhüllung - den Vorteil einer besseren Energieübertragung, insbesondere bei intensiver Strahlung, sowie einer erhöhten Flexibilität, wie sie beispielsweise für medizinische Anwendungen von großer Bedeutung ist. Der wesentliche Nachteil der gemäß der US-PS 3 740 113 aufgebauten Lichtleiter besteht darin, daß diese sich für die Übertragung von kurzwelliger Strahlung, insbesondere im UV-Bereich, nicht eignen, da der Brechungsindex des Polymermaterials zu hoch ist, um für UV-Strahlung durchlässige Flüssigkeiten noch einsetzen zu können. Auch ist die Lebensdauer solcher Lichtleiter begrenzt, da die Flüssigkeit in den Mantel hinein und durch diesen hindurch diffundiert.

Aus der US-PS 3 995 934 ist der Einsatz von perfluorierten Polymeren als Mantelmaterial für Lichtleiter mit flüssigem Kern bekanntgeworden, wobei dort genannt sind Polytetrafluorethylen, Polytrifluorchlorethylen und das Copolymere aus Tetrafluorethylen und Hexafluorpropylen. Die DE-PS 2 406 424 erwähnt zusätzlich den Einsatz von Fluorcarbonharzen mit Alkoxyseitenketten, worunter vermutlich die bekannten Copolymeren von Tetrafluorethylen mit Perfluor(alkylvinyl )-ethern zu verstehen sind. Diese Fluorpolymeren besitzen Brechungsindices, die unter dem Wert von 1,39 liegen und sind somit auch für Lichtleiter geeignet, die zur Übertragung von UV-Strahlung eingesetzt werden sollen. Die Anwendung von Flüssigkeiten, welche die genannten Fluorkunststoffe nicht benetzen, für den flüssigen Kern solcher Lichtleiter soll das Entweichen der Flüssigkeit durch den Mantel verhindern und die Langzeit-Beständigkeit solcher Lichtleiter erhöhen.

Dem stehen jedoch eine Reihe von gravierenden Nachteilen gegenüber. Die dort genannten Fluorkunststoffe sind zu kristallin, besitzen daher eine zu hohe Dämpfung der hindurchzuleitenden Strahlung, sie sind relativ steif und wenig flexibel, und sie sind nahezu unlöslich in gebräuchlichen organischen Lösungsmitteln. Daher können sie nicht aus organischen Lösungsmitteln zum Aufbau der Mantelschicht verarbeitet werden.

Der vorliegenden Erfindung liegt demgemäß die Aufgabe zugrunde, ein Mantelmaterial für Lichtleiter mit flüssigem Kern bereitzustellen, das diese Nachteile nicht aufweist.

Zur Lösung dieser Aufgabe wird ein Lichtleiter der eingangs genannten Art zur Verfügung gestellt, der dadurch gekennzeichnet ist, daß das fluorhaltige Polymermaterial ein Copolymeres ist, das aus 20 bis 75 Gew.-% an copolymerisierten Einheiten des Vinylidenfluorids sowie aus copolymerisierten Einheiten mindestens eines weiteren fluorhaltigen Monomeren besteht.

Dieses fluorhaltige Monomere ist insbesondere ein Perfluorolefin der Formel $CF_2=CFX$, worin X entweder F oder einen geradkettigen oder verzweigten Perfluoralkyl-Rest mit 1 bis 5 C-Atomen bedeutet oder einen Perfluor(alkylvinyl)-ether der Formel $CF_2=CF\text{-}0(CF_2)_nCF_3$, worin n = 0 bis 4, vorzugsweise 2 ist. Gegebenenfalls können auch mehrere dieser weiteren fluorhaltigen Monomeren zusammen mit VDF ein Ter- oder Quaterpolymeres bilden. Die in dem Copolymeren enthaltenen Einheiten können dabei über die Polymerkette statistisch verteilt oder in Blöcken angeordnet sein.

Aus diesen Gruppen seien erwähnt die Copolymeren des Vinylidenfluorids (VDF) mit Tetrafluorethylen (TFE), mit Hexafluorpropylen (HFP), mit Perfluor(alkylvinyl)-ethern (PAVE), wie beispielsweise Perfluor(methylvinyl)-ether, Perfluor(ethylvinyl)-ether und Perfluor(propylvinyl)-ether (PPVE). Die Terpolymeren und Quaterpolymeren wie VDF/HFP/TFE, VDF/HFP/PAVE, VDF/HFP/TFE/PAVE, sind eingeschlossen.

Die Herstellung dieser Copolymeren ist dem Fachmann bekannt. Beispielsweise sind Copolymere aus VDF und TFE beschrieben in den US-Patentschriften 2 468 054, 2 468 664, 2 471 959 und in den GB-Patentschriften 827 308 und 1 188 889. Copolymere von VDF und HFP sind bekannt aus beispielsweise den US-Patentschriften 3 006 881, 3 051 677 und 3 178 399 sowie der GB-Patentschrift 1 188 889. Copolymere von VDF und PAVE werden beschrieben in der US-Patentschrift 3 136 745. Terpolymere von VDF, TFE und HFP sind bekannt aus der US-Patentschrift 2 968 649, der GB-Patentschrift 1 188 889, der DE-Offenlegungsschrift 2 635 402 und der EP-Patentschrift 50 437, solche aus VDF, TFE und PAVE und auch solche aus VDF, HFP und PAVE aus der US-Patentschrift 3 235 537. Quaterpolymere aus VDF, TFE, HFP und PAVE sind beschrieben in der DE-Offenlegungsschrift 2 457 102 und der EP-Patentschrift 2 809. Besonders bevorzugt unter den genannten Copolymeren sind das Bipolymere von VDF mit HFP sowie das Terpolymere von VDF mit TFE und HFP. In sochen Copolymeren, beispielsweise in den Terpolymeren,bestehend aus VDF/TFE/HFP-Einheiten, können die eingebauten Comonomer-Einheiten in der Polymerkette rein statistisch verteilt oder auch gezielt in Blöcken angeordnet sein, letzteres um besonders elastische Eigenschaften zu erzielen. Auf diese Weise können beispielsweise Thermoplaste mit ausgeprägten Elastomereigenschaften, sogenannte "Thermolastics" erhalten werden.

Die erfindungsgemäß als Umhüllung für den flüssigen Kern des Lichtleiters verwendeten Copolymeren des VDF besitzen einen sehr niedrigen Brechungsindex $n_D^{25}$ ≦ 1.39, vorzugsweise ≦1,37 (gemessen nach DIN 53 491), der bei einer Reihe von Vertretern bis hinunter zu einem Wert von 1,355 reicht. Der Kristallinitätsgrad - ausgedrückt als die Kristallisationswärme des Polymeren, wie sie nach der DSC-Methode bei einer Abkühlungsgeschwindigkeit von 20 °C/min mit einem "Differential Scanning Calorimeter" DSC 4 der Fa. Perkin-Elmer gemessen wird - der erfindungsgemäß eingesetzten Copolymeren des VDF ist außerordentlich gering. Die Kristallisationswärme dieser Copolymeren liegt mindestens 30 % unter dem Wert des entsprechenden Homopolymeren Polyvinylidenfluorid, der je nach Herstellung etwa 50 J/g beträgt. Die erfindungsgemäß eingesetzten VDF-Copolymeren weisen eine Kristallisationswärme von ≦35 J/g auf, der Bereich reicht für einige der bevorzugten Vertreter bis zu praktisch nicht mehr meßbaren Werten, also bis zum praktisch völlig amorphen Zustand. Insbesondere gelangen VDF-Copolymere zum Einsatz, die eine Kristallisationswärme von 5 bis 10 J/g aufweisen.

Schläuche und Umhüllungen aus diesen Copolymeren sind hochtransparent im Bereich des sichtbaren Lichts und auch im Bereich der UV-Strahlung, und sie sind stabil gegen Strahlung in diesen Bereichen. Sie besitzen einen sehr niedrigen Schmelzbereich, der je nach Art der eingesetzten Comonomeren und ihrer Mengenverhältnisse bei 180 bis hinunter zu 80 °C liegen kann und vorzugsweise 120 bis 180 °C beträgt. Daher sind diese Copolymeren auch nach thermoplastischen Formgebungsmethoden leicht verformbar und können zu dünnwandigen Schläuchen von kleinem Durchmesser verformt werden. Solche Schläuche sind hochflexibel, so daß die hieraus hergestellten Lichtleitern wesentlich biegsamer sind als solche aus den steiferen Fluorpolymeren wie PTFE oder dem TFE-HFP-Copolymer. Darüber hinaus sind die erfindungsgemäß verwendeten VDF-Copolymeren im Hochfrequenzbereich leicht verschweißbar, wodurch die flüssigkeitsgefüllten Schläuche für die genannten Lichtleiter problemlos verschlossen werden können.

Die mit den genannten VDF-Copolymeren ummantelten, flüssigkeitsgefüllten Lichtleiter besitzen an der Außenfläche dieses Mantels ein gutes Haftungsvermögen für andere flexible Materialien, wodurch beispielsweise auf dem Mantel aus dem VDF-Copolymeren eine Armierung oder Verstärkung, beispielsweise ein Metall-, Glas- oder Textilfasergespinst oder ein flexibler Metallschlauch angebracht werden kann, aber auch eine schichtweise Struktur mit anderen Materialen möglich wird, bei der diese VDF-Copolymeren die Innenschicht in Kontakt mit der Flüssigkeit bilden. Von besonderem Vorteil ist dabei die Eigenschaft der in Rede stehenden VDF-Copolymeren, in einer Reihe von organischen Lösungsmitteln gut löslich zu sein, wie zum Beispiel in Ketonen wie Methylethyloder Methylisobutylketon, in chlorierten und/oder fluorierten Kohlenwasserstoffen, in N-Methylpyrrolidon, Dimethylformamid, Dimethylacetamid, Dimethylsulfoxid oder Tetrahydrofuran. Auf diese Weise können dünne Schichten des Mantelmaterials auf andere Materialien festhaftend aufgebracht werden, beispielsweise auf die Innenseite eines flexiblen Kunststoffschlauchs aus Materialien wie Naturkautschuk, Siliconkautschuk und andere synthetische Elastomeren, Weich-PVC, Polyester, Polyamide oder andere weichgestellte Thermoplaste.

Wenn es für bestimmte Zwecke erwünscht ist, eine starre Konstruktion eines solchen flüssigkeitsgefüllten Lichtleiters einzusetzen, beispielsweise zur Übertragung hoher Lichtmengen für Beleuchtungszwecke, was große Querschnitte des Lichtleiters erfordert, dann kann auch eine starre Umhüllung für den Mantel aus den genannten VDF-Copolymeren vorgesehen werden. Ein solcher starrer äußerer Mantel kann beispielsweise aus Glas, Metall oder einem starren Kunststoff bestehen, wie Polymethylmethacrylat oder Hart-PVC. Dabei kann ein Schlauch aus einem der genannten VDF-Copolymeren einfach in ein Rohr eines solchen starren Materials eingezogen werden. Vorzugsweise wird jedoch ein Rohr (das dann auch sehr kleinen Durchmesser besitzen kann) mit der obengenannten Lösung eines VDF-Copolymeren von innen her beschichtet.

Gegebenenfalls können auch Mehrschichtgebilde eingesetzt werden, bei denen der innerste Mantel stets aus den genannten VDF-Copolymeren besteht, die äußeren Schichten dann jedoch Kombinationen von starren Materialien miteinander, von flexiblen Materialien miteinander oder auch von starren mit flexiblen Materialien sein können. Die äußere Schicht kann auch Aussparungen ("Fenster") aufweisen, um dort einen Lichtaustritt zu ermöglichen.

Ferner können die Mantelmaterialien aus den genannten VDF-Copolymeren auch leicht verklebt oder darin andere Materialien eingebettet werden, zum Beispiel mit üblichen Epoxidharz-Klebern. Auf diese Weise ist es beispielsweise möglich, die Austrittsfenster für die Lichtleiter, die üblicherweise aus Zylindern aus strahlungsdurchlässigen Spezialgläsern bestehen, problemlos und flüssigkeitsdicht in den schlauchförmigen Mantel des Lichtleiters einzubetten.

Die den Mantel bildenden VDF-Copolymeren können bei Bedarf vernetzt werden, insbesondere im Anschluß an die Formung des Mantels, wodurch die Temperatur- und Lösungsmittelbeständigkeit in einer nach der Formung erwünschten Weise heraufgesetzt werden. Üblicherweise wird dies durch Strahlungsvernetzung bewirkt. Ein vorher aufgebrachter zweiter oder weiterer Mantel aus flexiblem, vernetzungsfähigem Material kann dabei mitvernetzt werden.

Die als Mantelmaterialien dienenden VDF-Copolymeren können mit färbenden Zusätzen versehen sein, wobei sowohl opak einfärbende Pigmente als auch transparente Färbungen hervorbringende Farbstoffe angewendet werden, die beispielsweise bestimmte erwünschte Lichtfilter-Wirkungen hervorbringen können. Solche Pigmente und Farbstoffe sind beispielsweise Titandioxid, Kobaltblau, Chrom(III)-oxid oder andere Metalloxide oder gegebenenfalls auch anorganische Leuchtpigmente wie diejenigen der ®Lumilux-Reihe der Firma Riedel de Haen, ferner organische Farbstoffe wie beispielsweise die "Fett"-Farbstoffe der Hoechst AG, also Fett-Gelb 3G oder Fett-Rot G oder Fett-Blau R etc., oder auch fluoreszierende organische Farbstoffe wie Eosin oder Fluorescein. Die Farbstoffe oder Pigmente können solche sein, die durch elektromagnetische Strahlung anregbar sind, also fluoreszierende oder lumineszierende Eigenschaften haben. Bei Pigmentierung oder Färbung des Mantelmaterials kann dieses durch die gesamte Masse hindurch oder auch nur schichtweise pigmentiert oder eingefärbt sein. Schließlich kann auch der flüssige Kern des Lichtleiters zur Erzielung besonderer Effekte mit einem Farbstoff versehen werden.

Dieser kann anorganischer oder organischer Natur sein. Bei Verwendung von Wasser, Alkoholen als Träger können verschiedene anorganische Salze und deren Komplexverbindungen verwendet werden, bei organischen Flüssigkeiten die verschiedene löslichen oder auch nichtlöslichen Farbstoffe.

Die verwendeten Farbstoffe können in gewünschter Weise durch elektromagnetische Strahlung anregbar sein und fluoreszierende oder auch luminiszierende Eigenschaften aufweisen.

Die Auswahl der lichtübertragenden Flüssigkeiten ist durch im wesentlichen zwei Kriterien begrenzt: Bei der selbstverständlich erforderlichen hohen Strahlungstransmission müssen sie

1.) einen Brechungsindex besitzen, der mindestens um 0,03 Einheiten größer ist als derjenige der als Mantelmaterial eingesetzten VDF-Copolymeren, und

2.) sie müssen gegenüber diesem Mantelmaterial inert sein, dürfen also weder diese Materialien lösen noch sie anquellen.

Soweit sie diese Bedingungen erfüllen, sind alle bekannten lichtleitenden Flüssigkeiten verwendbar, also beispielsweise Paraffine, Aromaten, halogenierte Verbindungen, Alkohol, Alkoholetherverbindungen, Lösungen von Salzen in Wasser oder schwerem Wasser, Silicone und andere. Als spezielle Beispiele seien genannt aliphatische Ether bestehend aus Ethylenglykoleinheiten der Formel

$$H-O-CH_2-CH_2-\left[O-CH_2-CH_2-\right]_n-OH \quad ,$$

wobei n = 1 bis 3 ist, oder

Siliconöle mit einem Brechungsindex $n_D^{20}$ von >1,45. Der Querschnitt der erfindungsgemäßen Lichtleiter kann rund, oval oder flächig sein und ist auf keine bestimmte Geometrie beschränkt.

Die erfindungsgemäßen Lichtleiter mit flüssigem Kern finden unter anderem Verwendung für medizinische Zwecke, zum Beispiel in der Endoskopie, in der Dentaltechnik, zur Übertragung von Lichtsignalen und für Beleuchtungszwecke.

Die nachfolgenden Beispiele sollen die Erfindung erläutern:

Beispiel 1

Ein Copolymeres aus 60 Gew.-% Vinylidenfluorid und 40 Gew.-% Hexafluorpropylen wurde bei 200 °C auf einem üblichen Schlauchextruder zu einem Schlauch mit 5 mm Innendurchmesser und 2 mm Wand verarbeitet.

Der erhaltene hochtransparente Schlauch zeigte die folgenden physikalischen Eigenschaften:

- Lichtdurchlässigkeit der Wand bei 400 bis 800 nm 93 % (Gesamtlicht)
- Brechungsindex $n_D^{25}$ = 1,367
- Kristallisationswärme, gemessen mit DSC-Methode bei 20 °C/min Abkühlungsgeschwindigkeit >5 J/g
- Schmelzbereich 80 bis 100 °C.

Nach U-förmiger Ausbildung des Schlauches mit einem Radius von 10 cm und Befüllen mit o-Xylol des

flüssigen Kerns wurde mit einer Kaltlichtquelle der Firma Schott und Gen., Typ KL 1500, Licht auf der einen Seite des Schlauches über die Faseroptik eingespeist und auf der anderen Seite das austretende Licht mit einer Fotozelle gemessen.

Bei einer Meßlänge von 500 mm betrug der Lichtverlust zwischen Lichteintritt und Lichtaustritt weniger als 20 %.

Beispiel 2

Ein handelsübliches Terpolymerisat, Handelsname ®Hostaflon TFB der Hoechst AG, bestehend aus 25 Gew.-% Vinylidenfluorid, 15 Gew.-% Hexafluorpropylen und 60 Gew.-% Tetrafluorethylen mit einem Schmelzbereich von 160 bis 180 °C wurde auf einer Schlauchanlage bei 230 bis 250 °C zu einem Schlauch mit 6 mm Innendurchmesser und 1,5 mm Wand verarbeitet. Es resultierte ein weicher, flexibler Schlauch, der eine Lichtdurchlässigkeit von über 90 % im sichtbaren Bereich und einen Brechungsindex $n_D^{25}$ von nur 1,358 zeigte. Der Kristallisationsgrad, bestimmt indirekt über die Kristallisationswärme (DSC/20 °C/min Abkühlungsgeschwindigkeit), war nahe dem Wert für den amorphen Zustand und zeigte einen Zahlenwert von nur 5,8 J/g. Entsprechend der Meßanordnung des Beispiels 1, jedoch mit einer gesättigten Calciumchloridlösung in Wasser als Lichtübertragungs-Flüssigkeit, wurde eine Lichtausbeute (= Differenz Lichteingang - Ausgang) von 75 % erzielt.

Beispiel 3

Ein Terpolymeres, bestehend aus 40 Gew.-% Vinylidenfluorid, 40 Gew.-% Tetrafluorethylen und 20 Gew.-% Hexafluorpropylen mit einem Schmelzbereich von 120 bis 130 °C wurde als 10 gew.-%ige Lösung in Methylisobutylketon zu einem Film vergossen. Dieser besaß eine Dicke von 0,1 mm, war hochtransparent im Bereich sichtbarer und UV-Strahlung (>95 %) und zeigte einen Brechungsindex $n_D^{25}$ von 1,355. Ein mit dieser Lösung innen beschichtetes Glasrohr mit einem Brechungsindex von 1,46 und einem Auftrag des Terpolymeren von 0,1 mm Dicke zeigte nach Füllen mit Flüssigkeiten mit Brechungsindex >1,40 ausgezeichnete Lichtübertragungs-Ergebnisse.
In einem Parallelversuch wurde mit gleichen Ergebnissen ein Rohr aus Polymethylmethacrylat beschichtet.

Beispiel 4

Ein Terpolymerisat bestehend aus Vinylidenfluorid-, Hexafluorpropen-und Tetrafluorethylen-Einheiten im Gewichtsverhältnis von 20 : 20 : 60 wurde zu einem Schlauch mit 6 mm Innendurchmesser und 1,5 mm Wand verarbeitet und anschließend mit hochreinem Triethylenglykol der Formel

$$HO-CH_2-CH_2-\left[ O-CH_2-CH_2 \right]_2 OH$$

gefüllt. Bei einer Meßstrecke von 1 m Länge wurde im sichtbaren Bereich (380 bis 780 nm) eine Lichtausbeute von 70 % erzielt.

Beispiel 5

Beispiel 4 wurde wiederholt, der erhaltene Schlauch jedoch mit Triethylenglykol gefüllt, eingefärbt mit 0,01 % eines typischen Laser Fluoreszenzfarbstoffes Rhodamin 590 der Fa. EXCITON Corp./Dayton/USA. Nach Ablängung des gefüllten Schlauches auf 2 m Länge und Verschluß mit Stopfen aus Quarzglas wurde bei Anregung mit UV-Licht eine starke Anregung des Farbstoffes erzielt, einsetzbar für Beleuchtungszwekke.

**Patentansprüche**

1. Lichtleiter mit einem flüssigen Kern, der aus einer Flüssigkeit hoher Strahlungstransmission besteht, und einem Mantel aus einem fluorhaltigen Polymermaterial, dadurch gekennzeichnet, daß dieses fluorhaltige Polymermaterial ein Copolymeres ist, das aus mindestens 20 Gew.-% und höchstens 75

Gew.-% an copolymerisierten Einheiten des Vinylidenfluorids sowie aus copolymerisierten Einheiten mindestens eines weiteren fluorhaltigen Monomeren besteht.

2. Lichtleiter gemäß Anspruch 1, dadurch gekennzeichnet, daß das Copolymere neben den copolymerisierten Einheiten des Vinylidenfluorids aus copolymerisierten Einheiten eines Perfluorolefins der Formel $CF_2=CFX$ besteht, worin X für F, für einen geradkettigen oder für einen verzweigten Perfluoralkyl-Rest mit 1 bis 5 C-Atomen steht.

3. Lichtleiter gemäß Anspruch 1, dadurch gekennzeichnet, daß das Copolymere neben den copolymerisierten Einheiten des Vinylidenfluorids aus copolymerisierten Einheiten eines Perfluorolefins der Formel $CF_2=CFX$, worin X für F, für einen geradkettigen oder für einen verzweigten Perfluoralkyl-Rest mit 1 bis 5 C-Atomen steht, sowie aus copolymerisierten Einheiten eines Perfluor(alkylvinyl)-ethers der Formel $CF_2=CF\text{-}O\text{-}(CF_2)_nCH_3$, worin n = 0 bis 4 ist, besteht.

4. Lichtleiter gemäß Anspruch 1, dadurch gekennzeichnet, daß das Copolymere neben copolymerisierten Einheiten des Vinylidenfluorids noch copolymerisierte Einheiten des Hexafluorpropylens enthält.

5. Lichtleiter gemäß Anspruch 1, dadurch gekennzeichnet, daß das Copolymere neben copolymerisierten Einheiten des Vinylidenfluorids noch copolymerisierte Einheiten des Tetrafluorethylens und des Hexafluorpropylens enthält.

6. Lichtleiter gemäß einem oder mehreren der Ansprüche 1 bis 5, dadurch gekennzeichnet, daß der Mantel aus fluorhaltigem Polymermaterial von mindestens einem Mantel aus anderem Material umgeben ist.

7. Lichtleiter gemäß einem oder mehreren der Ansprüche 1 bis 6, dadurch gekennzeichnet, daß das Copolymere vernetzt ist.

8. Lichtleiter gemäß einem oder mehreren der Ansprüche 1 bis 7, dadurch gekennzeichnet, daß der Mantel durchgehend mit Farbstoffen oder Pigmenten versehen ist, die fluoreszierend oder phosphoreszierend sein können.

9. Lichtleiter gemäß einem oder mehreren der Ansprüche 1 bis 7, dadurch gekennzeichnet, daß der Mantel Schichten enthält, die mit Farbstoffen oder Pigmenten versehen sind, die fluoreszierend oder phosphoreszierend sein können.

## Claims

1. A fiber optic having a liquid core, which comprises a liquid of high radiation transmission, and a sheath made from a fluorine-containing polymer material,
characterized in that this fluorine-containing polymer material is a copolymer which comprises at least 20 % by weight and at most 75 % by weight of copolymerised units of vinylidene fluoride and copolymerised units of at least one further fluorine-containing monomer.

2. A fiber optic as claimed in claim 1, characterized in that the copolmyer comprises, besides the copolymerised units of vinylidene fluoride, copolymerised units of a perfluoroolefin of the formula $CF_2=CFX$, in which X represents F, or a straight-chain or branched perfluoroalkyl radical having 1 to 5 carbon atoms.

3. A fiber optic as claimed in claim 1, characterized in that the copolymer comprises, besides the copolymerised units of vinylidene fluoride, copolymerised units of a perfluoroolefin of the formula $CF_2=CFX$, in which X represents F, or a straight-chain or branched perfluoroalkyl radical having 1 to 5 carbon atoms, and copolymerised units of a perfluoro(alkylvinyl) ether of the formula $CF_2=CF\text{-}O\text{-}(CF_2)_nCH_3$, in which n is 0 to 4.

4. A fiber optic as claimed in claim 1, characterized in that the copolymer contains, besides copolymerised units of vinylidene fluoride, copolymerised units of hexafluoropropylene.

5. A fiber optic as claimed in claim 1, characterized in that the copolymer contains, besides copolymerised units of vinylidene fluoride, copolymerised units of tetrafluoroethylene and of hexafluoropropylene.

6. A fiber optic as claimed in one or more of claims 1 to 5, characterized in that the sheath of fluorine-containing polymer material is surrounded by at least one sheath of another material.

7. A fiber optic as claimed in one or more of claims 1 to 6, wherein the copolymer is crosslinked.

8. A fiber optic as claimed in one or more of claims 1 to 7, characterized in that the sheath is continuously provided with dyestuffs or pigments, which can be fluorescent or phosphorescent.

9. A fiber optic as claimed in one or more of claims 1 to 7, characterized in that the sheath contains layers which are provided with dyestuffs or pigments which can be fluorescent or phosphorescent.

## Revendications

1. Fibre optique à coeur liquide, constitué d'un liquide ayant un pouvoir élevé de transmission des rayonnements, et comportant une gaine en un matériau polymère fluoré, caractérisée en ce que ce matériau polymère fluoré est un copolymère constitué d'au moins 20 % en poids et d'au plus 75 % en poids de motifs copolymérisables fluorure de vinylidène et de motifs copolymérisables d'au moins un autre monomère fluoré.

2. Fibre optique selon la revendication 1, caractérisée en ce que le copolymère, outre les motifs copolymérisables fluorure de vinylidène, comprend aussi des motifs copolymérisés d'une perfluoroléfine de formule $CF_2=CFX$, où X est F ou un radical perfluoralkyle à chaîne droite ou ramifiée ayant 1 à 5 atomes de carbone.

3. Fibre optique selon la revendication 1, caractérisée en ce que le copolymère, outre les motifs copolymérisés fluorure de vinylidène, est constitué aussi de motifs copolymérisés d'une perfluoroléfine de formule $CF_2=CFX$, où X est F ou un radical perfluoralkyle à chaîne droite ou ramifiée ayant 1 à 5 atomes de carbone, ainsi que de motifs copolymérisés d'un oxyde perfluoré d'alkyle et de vinyle de formule

$CF_2=CF\text{-}O(CF_2)_nCF_3$

où n = 0 à 4.

4. Fibre optique selon la revendication 1, caractérisée en ce que le copolymère, outre les motifs copolymérisés fluorure de vinylidène, contient encore des motifs copolymérisés hexafluoropropylène.

5. Fibre optique selon la revendication 1, caractérisée en ce que le copolymère, outre des motifs copolymérisés fluorure de vinylidène, contient encore des motifs copolymérisés tétrafluoréthylène et hexafluoropropylène.

6. Fibre optique selon l'une ou plusieurs des revendications 1 à 5, caractérisée en ce que la gaine en un matériau polymère fluoré est entourée d'au moins une gaine en un autre matériau.

7. Fibre optique selon l'une ou plusieurs des revendications 1 à 6, caractérisée en ce que le copolymère est réticulé.

8. Fibre optique selon l'une ou plusieurs des revendications 1 à 7, caractérisée en ce que la gaine est entièrement additionnée de colorants ou de pigments, qui peuvent être fluorescents ou phosphorescents.

9. Fibre optique selon l'une ou plusieurs des revendications 1 à 7, caractérisée en ce que la gaine contient des couches qui sont additionnées de colorants ou de pigments pouvant être fluorescents ou phosphorescents.